# FASCICULE DE BREVET EUROPEEN

(11) **EP 0 465 393 B1**
(45) Date de publication et mention de la délivrance du brevet: **21.09.1994**
(21) Numéro de dépôt: 91440053.6
(22) Date de dépôt: 28.06.1991
(51) Int. Cl.: A01D 78/10, A01B 73/04

(54) **Machine agricole, notamment une andaineuse de végétaux, à largeur de travail réglable**
Landwirtschaftliche Maschine, insbesondere Schwader für Pflanzengut, mit verstellbarer Arbeitsbreite
An agricultural machine, especially a crop windrower, with an adjustable working width

(30) Priorité: 05.07.1990 FR 9008717
(43) Date de publication de la demande: 08.01.1992
(73) Titulaire: KUHN S.A., F-67700 Saverne (FR)
(72) Inventeur: Aron, Jérôme M., F-67330 Dossenheim sur Zinsel (FR)
(74) Mandataire: Andres, Jean-Claude

(56) Documents cités:
- EP-A- 0 289 864
- EP-A- 0 381 970
- CH-A- 654 977
- DE-A- 1 482 147
- DE-U- 7 835 320

## Description

La présente invention se rapporte à une machine agricole, en particulier une andaineuse de végétaux couchés sur le sol, comportant une structure porteuse, au moins un bras télescopique qui est réalisé en au moins deux parties dont la première est articulée sur la structure porteuse et la seconde peut coulisser par rapport à la première, lequel bras télescopique est déplaçable dans le sens de la hauteur, d'une position de travail dans une position de transport et inversement et, au moins un organe de travail tel qu'un rotor d'andainage, cet organe de travail étant articulé sur la partie coulissante du bras télescopique. Une telle machine est connue par le document DE-GM-7835320.

Le bras télescopique permet de modifier la position de l'organe de travail par rapport à la structure porteuse. Ainsi, sur une andaineuse avec deux bras télescopiques portant chacun un rotor, il est possible de modifier la distance entre les deux rotors. De cette manière l'utilisateur peut modifier la largeur de travail de l'andaineuse en fonction du volume des végétaux à andainer.

Sur une autre andaineuse connue de ce genre, la longueur des bras télescopiques est réglable au moyen de vérins hydrauliques. Cet agencement est tributaire du circuit hydraulique du tracteur. Il ne peut être actionné qu'au moyen d'un tracteur qui est équipé en conséquence. De plus, le prix des différents composants hydrauliques qui sont nécessaires sur la machine est relativement élevé.

Par le document EP-A-0381970 on connait également un état de la technique selon l'article 54(3).

Un autre inconvénient de cet agencement hydraulique est que la position des rotors n'est pas contrôlable d'une manière précise avec les vérins hydrauliques. De ce fait, l'utilisateur est obligé de mettre en place des butées qui doivent arrêter les bras télescopiques dans les positions recherchées.

Un autre inconvénient de l'agencement hydraulique consiste en ce que le raccourcissement des bras télescopiques, pour réduire la hauteur de la machine dans la position de transport, nécessite une commande expresse de la part de l'utilisateur. Cette opération peut cependant être omise. Dans ce cas la machine est instable et elle peut facilement se renverser dans un virage. Les rotors peuvent aussi rester accrochés lorsqu'ils passent sous un porche ou un pont et subir d'importants dommages.

La présente invention a pour but de remédier aux inconvénients précités. Elle doit notamment proposer une machine sur laquelle la longueur des bras télescopiques est très facilement réglable, sans qu'elle soit pour autant tributaire du circuit hydraulique du tracteur et sur laquelle la sécurité au transport est assurée.

A cet effet, la machine selon l'invention comporte sur chaque bras télescopique un dispositif à tringle agencé pour provoquer automatiquement l'allongement dudit bras lorsqu'il est déplacé en position de travail et son raccourcissement lorsqu'il est déplacé en position de transport, chaque dispositif étant situé entre la structure porteuse et la partie coulissante du bras correspondant, la position du dispositif sur la structure porteuse pouvant être modifiée. Ce dispositif à tringle ne comporte aucun composant hydraulique. Il est cependant très simple à mettre en oeuvre et n'entraîne pas un important accroissement du prix de la machine. De plus, comme les bras télescopiques sont automatiquement raccourcis lorsqu'ils sont amenés dans la position de transport la hauteur de la machine est d'office réduite. De ce fait, sa stabilité est améliorée et le risque que les rotors subissent des détériorations lors d'un passage sous un porche ou un pont est moins grand.

Selon une caractéristique de l'invention chaque dispositif à tringle se compose d'une seule tringle pouvant être fixée sur plusieurs pivots prévus sur la structure porteuse. Cette tringle agit sur la partie coulissante du bras télescopique correspondant lorsque celui-ci est déplacé autour de son axe d'articulation avec la structure porteuse. Elle amène ainsi le rotor correpondant dans la position de travail choisie par l'utilisateur ou la position de transport et le maintien d'une manière sûre dans chacune de ces positions.

Selon une autre caractéristique de l'invention chaque dispositif à tringle se compose d'une première tringle qui est articulée à la fois sur la structure porteuse et sur un levier qui est lui même articulé sur la première partie du bras télescopique correspondant et, d'une seconde tringle qui est également articulée sur ledit levier et sur la partie coulissante du bras télescopique. La première tringle comporte un pivot qui peut être engagé dans différents orifices prévus dans une plaque solidaire de la structure porteuse, en vue de modifier la largeur de travail. Lorsque le bras télescopique est déplacé de la position de transport dans la position de travail ou inversement, la première tringle actionne le levier et à travers celui-ci, la seconde tringle. Celle-ci agit alors sur la partie coulissante du bras télescopique afin de positionner le rotor. Le levier situé entre les deux tringles permet d'obtenir une amplification du déplacement de la seconde tringle et de la partie coulissante du bras télescopique.

D'autres caractéristiques et avantages de l'invention ressortiront des revendications et de la description ci-après de quelques exemples de réalisation non limitatifs de l'invention, avec référence aux dessins annexés dans lesquels :

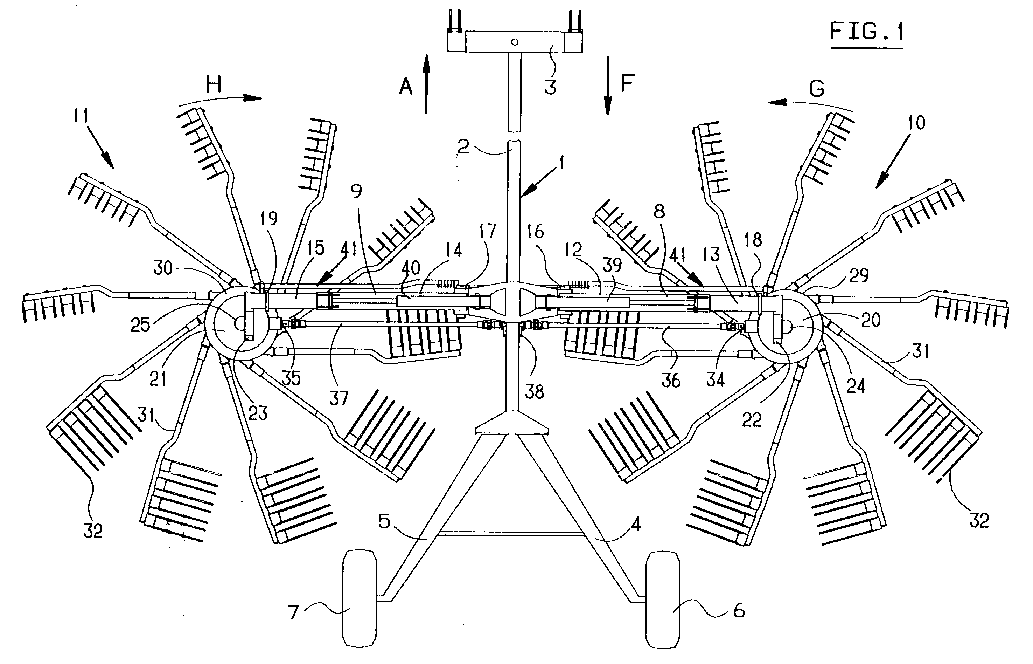

- la figure 1 représente une vue de dessus d'une machine selon l'invention,
- la figure 2 représente, à plus grande échelle, une vue de détail suivant la flèche F de la figure 1,
- la figure 3 représente une vue analogue à celle de la figure 2, d'un deuxième exemple de réalisation.

Telle qu'elle est représentée sur les figures annexées, la machine selon l'invention comporte une structure porteuse (1). Celle-ci est notamment constituée par une poutre (2) qui est dirigée dans la direction d'avancement (A). Cette poutre (2) possède à son extrémité avant un dispositif d'accouplement (3) pour l'accrocher à un tracteur d'entraînement qui n'est pas représenté. A son extrémité arrière elle possède deux supports (4 et 5) divergents, ayant chacun une roue porteuse (6 et 7) qui repose sur le sol. Sur chaque côté de cette poutre (2) est articulé un bras télescopique (8 et 9) portant chacun un rotor d'andainage (10 et 11). Chaque bras télescopique (8, 9) pourrait aussi être muni de deux rotors. Dans ce cas la machine en comporterait quatre au total et aurait une largeur de travail plus importante. Chacun desdits bras (8 et 9) est réalisé en deux parties (12, 13 et 14, 15). Chaque première partie (12, 14) est articulée sur la structure porteuse (1) au moyen d'un axe (16, 17) qui est sensiblement horizontal et dirigé dans la direction d'avancement (A). Chaque deuxième partie (13, 15) peut coulisser dans la première partie (12, 14) en vue de pouvoir allonger ou raccourcir les bras (8 et 9). Les parties coulissantes (13 et 15) comportent des butées (18 et 19) au moyen desquelles elles s'appuient sur les premières parties (12 et 14) lorsqu'elles sont totalement rétractées.

Les deux rotors d'andainage (10 et 11) sont sensiblement identiques. Chacun comporte un carter (20, 21) qui est articulé sur l'extrémité de la partie coulissante (13, 15) de chaque bras télescopique (8, 9) au moyen d'un axe (22, 23) qui est également sensiblement horizontal et dirigé dans la direction d'avancement (A). De part et d'autre de ces axes (22, 23) sont prévues des butées pour limiter dans une certaine fourchette les pivotements des rotors (10, 11). Dans chacun de ces carters (20, 21) est fixé un axe support (24, 25). Celui-ci porte à son extrémité la plus éloignée du carter (20, 21) une traverse (26) avec deux roues (27 et 28) qui sont dirigées dans la direction d'avancement (A). Entre la traverse (26) et ledit carter (20, 21) de chaque rotor (10, 11) est prévu un boîtier (29, 30) avec des bras (31) équipés d'outils de travail (32) tels que des dents. Ce boîtier (29, 30) est monté sur l'axe support (24, 25) de manière à pouvoir tourner autour. Les bras porte-outils (31) sont guidés dans des paliers (33) solidaires du boîtier (29, 30) de sorte qu'ils puissent pivoter autour de leurs axes géométriques longitudinaux respectifs. A l'intérieur de ce boîtier (29, 30) est prévue, d'une manière connue, une came de commande qui est fixée sur l'axe support (24, 25). Chaque bras porte-outils (31) comporte à son extrémité située dans le boîtier (29, 30) un levier avec un galet qui est guidé dans ladite came. Des rotors avec des outils de travail non commandés pourraient également équiper la machine selon l'invention.

Dans le carter (20, 21) de chaque rotor (10, 11) sont prévus des moyens mécaniques pour entraîner le boîtier (29, 30) en rotation autour de l'axe support (24, 25). Ces moyens sont constitués par une couronne dentée qui est solidaire de la partie supérieure du boîtier (29, 30) et un pignon d'entraînement qui engrène avec ladite couronne. Ce pignon est lié à un arbre (34, 35) qui s'étend hors du carter (20, 21) en direction de la poutre (2). Sur cet arbre (34, 35) est branché un arbre de transmission (36, 37) avec un joint de cardan près de chacune de ses extrémités. Cet arbre de transmission est relié à un carter de distribution (38) qui est fixé sous la poutre (2) et qui est relié par d'autres arbres de transmission à l'arbre de prise de force du tracteur.

Le bras télescopique (8, 9) de chaque rotor (10, 11) est équipé d'un vérin hydraulique (39, 40) qui permet de le relever dans une position sensiblement verticale pour le transport. Chaque vérin (39, 40) est articulé avec une de ses extrémités sur la structure (1) et avec son autre extrémité sur la première partie (12, 14) du bras (8, 9) correspondant.

Chaque bras télescopique (8, 9) comporte un dispositif de commande à tringle (41, 42) qui provoque automatiquement son allongement lorsqu'il est déplacé en position de travail et son raccourcissement lorsqu'il est déplacé en position de transport. Chacun de ces dispositifs (41, 42) est situé entre la structure porteuse (1) et la partie coulissante (13, 15) du bras (8, 9) correspondant. La position de ce dispositif (41, 42) sur la structure porteuse (1) peut être modifiée en fonction de la largeur de travail recherchée.

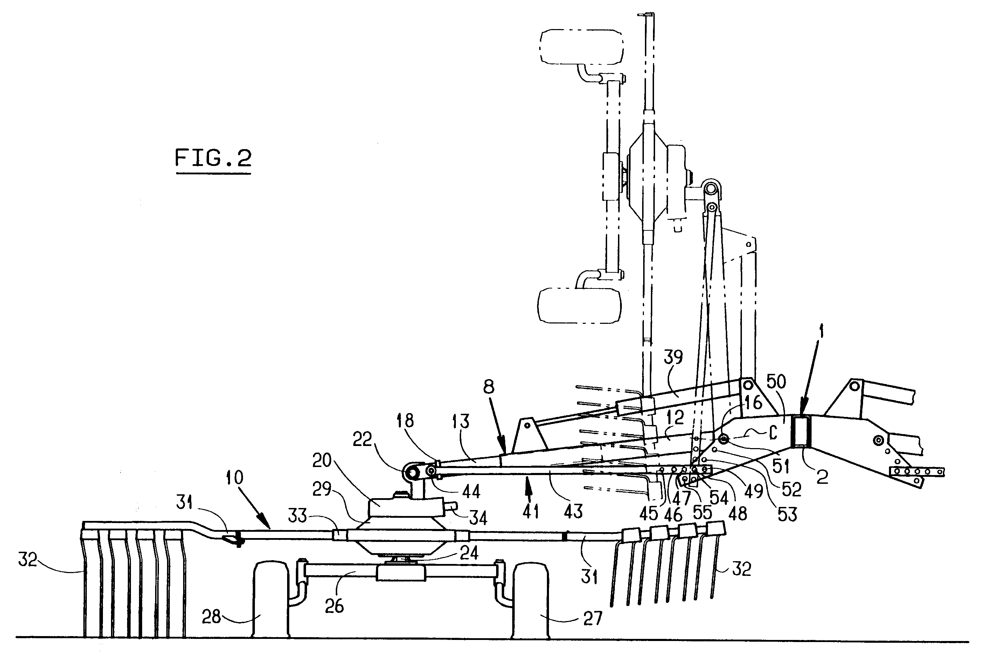

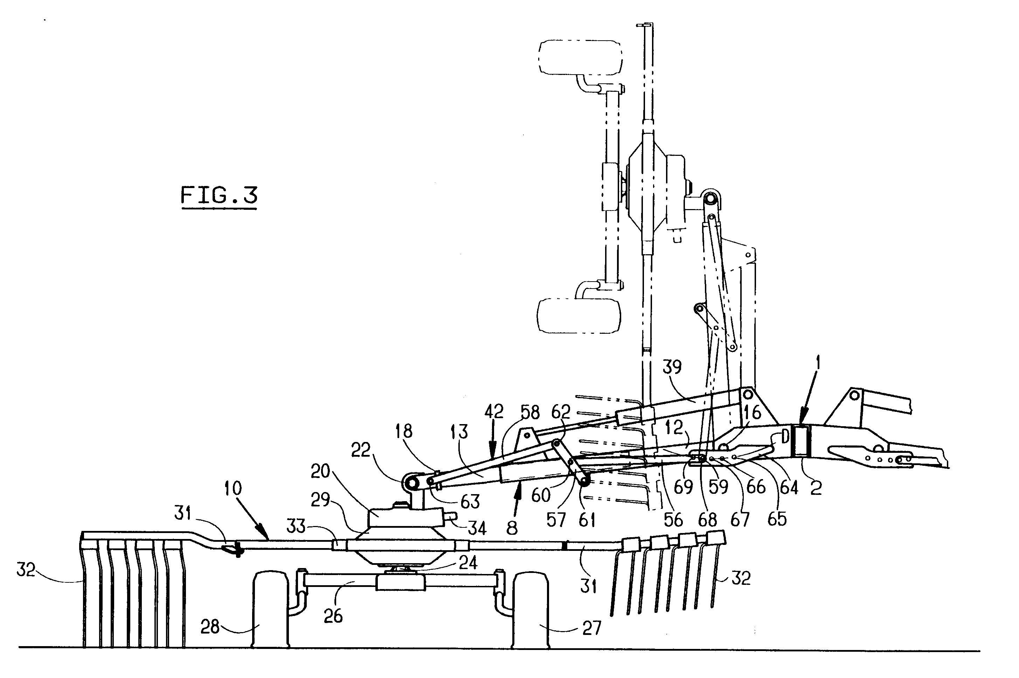

Deux exemples de réalisation de dispositifs à tringle (41, 42) sont décrits ci après avec références aux figures 2 et 3. Celles-ci représentent un seul côté de la machine. On comprendra toutefois que le bras télescopique (9) et le dispositif à tringle (41, 42) situé de l'autre côté de la machine sont réalisés de la même manière que ceux représentés.

Dans l'exemple de réalisation qui est représenté à plus grande échelle sur la figure 2, le dispositif à tringle (41) se compose d'une seule tringle (43). L'une des extrémités de cette tringle (43) est articulée sur un pivot (44) qui est situé près de l'extrémité extérieure de la partie coulissante (13) du bras (8). L'autre extrémité de ladite tringle comporte cinq orifices (45 à 49) situés l'un derrière l'autre dans le sens de sa longueur. La structure porteuse (1) comporte une plaque latérale (50) munie de cinq pivots (51 à 55) constituant des points de fixation de tringle (43). Ces pivots (51 à 55) se situent à des intervalles sensiblement réguliers sur une ligne passant par l'axe d'articulation (16) du bras télescopique (8) correspondant. Cette ligne est dirigée vers le bas et vers l'extérieur par rapport à la poutre (2). Elle forme un angle d'environ 45° par rapport à l'horizontale.

Un premier pivot (51) se situe sur ledit axe d'arti-culation (16). A ce pivot correspond un orifice (45) de la tringle (43). Cet orifice (45) se situe sur un arc de cercle (C) qui passe par ledit pivot (51) et dont le centre se situe, lorsque le bras télescopique (8) est en position de transport, telle que représentée en traits mixtes, sur l'axe géométrique du pivot (44) qui sert à articuler la tringle (43) sur la partie coulissante (13). De même, chacun des autres orifices (46 à 49) se situe sur un arc de cercle concentrique à l'arc de cercle (C) et passant par un des autres pivots (52 à 55). Chaque orifice (45 à 49) correspond ainsi au pivot (51 à 55) qui est situé sur le même arc de cercle. Ceci permet de fixer la tringle (43) sur l'un quelconque des pivots (51 à 55) grâce à l'orifice (45 à 49) correspondant. Le nombre de ces orifices (45 à 49) et des pivots (51 à 55) est purement indicatif, il peut être supérieur ou inférieur à cinq.

Dans l'exemple de réalisation représenté sur la figure 3, le dispositif à tringle (42) se compose d'une première tringle (56) qui est articulée à la fois sur la structure porteuse (1) et sur un levier (57) et, d'une seconde tringle (58) qui est également articulée sur ledit levier (57) et sur la partie coulissante (13) du bras télescopique (8). La première tringle (56) est articulée sur la structure porteuse (1) au moyen d'un pivot (59) et sur le levier (57) au moyen d'un axe (60). Ce levier (57) est lui même articulé à l'une de ses extrémités sur la première partie (12) du bras télescopique (8) par un axe (61). Enfin, la deuxième tringle (58) est articulée sur le levier (57) avec un axe (62) et sur la partie coulissante (13) du bras télescopique (8) au moyen d'un axe (63). Cet axe (63) se situe près de l'extrémité extérieure de la partie coulissante (13). Le pivot (59) et les axes d'articulation (60 à 63) sont sensiblement parallèles entre eux et dirigés dans la direction d'avancement (A).

D'autre part, l'axe d'articulation (60) de la première tringle (56) sur le levier (57) se situe entre l'axe d'articulation (61) de ce levier (57) sur la première partie (12) et l'axe d'articulation (62) de la seconde tringle (58). Les distances entre ledit axe d'articulation (60) et chacun des deux autres axes d'articulation (61 et 62) sont sensiblement égales. On obtient ainsi un doublement du déplacement de la deuxième tringle (58) par rapport à la première tringle (56).

Le pivot (59) est lié à la première tringle (56). La structure porteuse (1) comporte une plaque (64) qui est munie de cinq orifices (65 à 69) constituant des points de fixation pour la tringle (56). L'utilisateur peut engager le pivot (59) de la tringle (56) dans l'un quelconque de ces orifices (65 à 69) lorsque l'ensemble constitué par le bras télescopique (8) et les tringles (56 et 58) est en position de transport (position représentée en traits mixtes). Ces orifices (65 à 69) et le pivot (59) de la tringle (56) se trouvent sur un arc de cercle (D) dont le centre se situe sur l'axe géométrique de l'axe d'articulation (60) de la première tringle (56) sur le levier (57), lorsque le bras télescopique (8) est en position de transport. Un premier orifice (65) est situé sur l'arc de cercle (D) de telle sorte que lorsque le pivot (59) y est engagé les tringles (56 et 58) maintiennent le bras télescopique (8) sensiblement à la même longueur que dans la position de transport. Les autres orifices (66 à 69) sont de plus en plus éloignés dudit premier orifice (65) et provoquent des allongements de plus en plus importants du bras télescopique (8) dans la position de travail.

Durant le travail, la machine selon l'invention est attelée à un tracteur qui la déplace dans le sens de la flèche (A). Les deux bras télescopiques (8 et 9) sont alors abaissés de sorte que les roues (27 et 28) des deux rotors (10 et 11) reposent sur le sol. Les boîtiers (29 et 30) de ces rotors (10 et 11) sont entraînés en rotation dans le sens des flèches (G et H), à partir de l'arbre de prise de force du tracteur. Durant cette rotation les bras porte-outils (31) de chaque rotor (10, 11) sont commandés par la came qui est logée dans le boîtier (29, 30) de telle sorte que leurs outils (32) râtellent les végétaux sur la partie avant de leur trajectoire et les déposent sous la forme d'un andain sur la bande de terrain qui est située entre les deux rotors (10 et 11).

La largeur de travail de cette machine peut être augmentée ou diminuée en modifiant la longueur des bras télescopiques (8 et 9) et par conséquent la distance entre les rotors (10 et 11). Ceci permet d'augmenter la largeur râtelée par exemple lorsque les végétaux ne sont pas denses. Inversement, lorsqu'ils sont très denses et que l'andain aurait un volume trop important, la largeur de travail peut être réduite. Sur la machine qui est représentée sur la figure 2, l'augmentation ou la diminution de la longueur des bras télescopiques (8 et 9) est obtenue en déplaçant les tringles (43) sur les pivots (51 à 55) correspondants. Pour effectuer cette opération les bras télescopiques (8 et 9) doivent être relevés en position de transport telle que représentée en traits mixtes. La tringle (43) de chaque bras (8, 9) peut alors être fixée sur n'importe lequel des pivots (51 à 55) situés sur le même côté qu'elle par rapport à la poutre (2).

Si par exemple ces tringles (43) sont fixées sur les pivots (51) avec leurs orifices (45), la longueur des bras télescopiques (8 et 9) ne varie pratiquement pas lorsqu'ils sont transposés dans la position de travail. Dans cette position la machine présente sa plus petite largeur de travail. Si au contraire, les tringles (43) sont fixées, comme cela est représenté, sur les pivots (54) au moyen de leurs orifices (48) elles poussent les parties coulissantes (13 et 15) des bras télescopiques (8 et 9) vers l'extérieur durant la descente vers la position de travail. Ceci provoque l'allongement desdits bras, ce qui produit une augmentation de la largeur de travail. De la même manière les tringles (43) peuvent être placées sur les autres pivots (52, 53 ou 55) au moyen des orifices (46, 47 ou 49) correspondants. L'utilisateur a ainsi la possibilité de choisir la largeur de travail la mieux adaptée.

D'autre part, quelle que soit la position des tringles (43) au travail, elles tirent sur les parties coulissantes (13 et 15) et raccourcissent les bras (8 et 9) dans la position minimale lorsque ceux-ci sont relevés dans la position de transport.

Sur la machine selon la figure 3 l'augmentation ou la diminution de la longueur des deux bras télescopiques (8 et 9) est obtenue en déplaçant les pivots (59) des premières tringles (56) d'un orifice (65 à 69) à un autre. Au cas où ces pivots (59) sont engagés dans les orifices (65) la longueur des bras télescopiques (8 et 9) est sensiblement identique au travail et au transport. Par contre, si les pivots (59) des tringles (56) sont engagés dans l'un des orifices (66 à 69) les premières tringles (56) poussent sur les leviers (57) lorsque les bras (8 et 9) sont amenés en position de travail. Lesdits leviers (57) poussent alors sur les secondes tringles (58) qui déplacent les parties coulissantes (13 et 15) avec les rotors (10 et 11) vers l'extérieur. On obtient ainsi différentes largeurs de travail. Chaque fois que les bras télescopiques (8 et 9) sont relevés dans la position de transport les tringles (56 et 58) ramènent les parties coulissantes (13 et 15) vers l'intérieur, dans la position minimale déterminée par la butée (18). La hauteur de la machine est ainsi automatiquement réduite.

Dans la position de transport les bras télescopiques (8 et 9) peuvent être bloqués au moyen d'un dispositif de verrouillage évitant tout retour accidentel en position de travail. Les bras porte-outils (31) peuvent avoir des parties extérieures démontables. L'utilisateur a ainsi la possiblilité de démonter celles qui sont dirigées vers le haut afin d'obtenir une réduction supplémentaire de la hauteur de la machine.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine agricole, en particulier une andaineuse de végétaux couchés sur le sol, comportant une structure porteuse (1), au moins un bras télescopique (8, 9) qui est réalisé en au moins deux parties dont la première (12, 14) est articulée sur la structure porteuse et la seconde (13, 15) peut coulisser par rapport à la première (12, 14), lequel bras télescopique (8, 9) est déplaçable dans le sens de la hauteur, d'une position de travail dans une position de transport et inversement, au moins un organe de travail tel qu'un rotor d'andainage, cet organe de travail étant articulé sur la partie coulissante du bras télescopique (8, 9), et au moins un dispositif pour régler la longueur dudit bras télescopique (8, 9), caractérisée par le fait que chaque bras télescopique (8, 9) comporte un dispositif à tringle (41, 42) agencé pour provoquer automatiquement son allongement lorsqu'il est déplacé en position de travail et son raccourcissement lorsqu'il est déplacé en position de transport, chaque dispositif à tringle (41, 42) étant situé entre la structure porteuse (1) et la partie coulissante (13, 15) du bras (8, 9) correspondant, la position du dispositif à tringle (41, 42) sur la structure porteuse (1) pouvant être modifiée.

2. Machine selon la revendication 1, caractérisée par le fait que chaque dispositif à tringle (41) se compose d'une seule tringle (43) qui est articulée au moyen d'un pivot (44) sur la partie coulissante (13, 15) du bras (8, 9) et qui peut être fixée sur différents pivots (51 à 55) prévus sur la structure porteuse (1).

3. Machine selon la revendication 2, caractérisée par le fait que les pivots (51 à 55) se situent sur une ligne passant par l'axe d'articulation (16, 17) du bras télescopique (8, 9) correspondant.

4. Machine selon la revendication 3, caractérisée par le fait que la ligne sur laquelle se situent les pivots (51 à 55) est inclinée vers le bas et vers l'extérieur.

5. Machine selon l'une quelconque des revendications 2 à 4, caractérisée par le fait que la tringle (43) comporte plusieurs orifices (45 à 49) pour sa fixation sur les pivots (51 à 55).

6. Machine selon la revendication 5, caractérisée par le fait que chaque orifice (45 à 49) de la tringle (43) se situe, en position de transport, sur un arc de cercle passant par un des pivots (51 à 55) et dont le centre se situe sur l'axe géométrique du pivot (44) de la tringle (43) sur la partie coulissante (13, 15).

7. Machine selon la revendication 1, caractérisée par le fait que chaque dispositif à tringle (42) se compose d'une première tringle (56) articulée à la fois sur la structure porteuse (1) et sur un levier (57) qui est lui même articulé sur la première partie (12, 14) du bras télescopique (8, 9) correspondant et, d'une seconde tringle (58) qui est également articulée sur ledit levier (57) et sur la partie coulissante (13, 15) du bras (8, 9).

8. Machine selon la revendication 7, caractérisée par le fait que l'axe d'articulation (60) de la première tringle (56) sur le levier (57) se situe entre l'axe d'articulation (61) de ce levier (57) sur la première partie (12, 14) du bras télescopique (8, 9) et l'axe d'articulation (62) de la seconde tringle (58) sur ledit levier (57).

9. Machine selon la revendication 8, caractérisée par le fait que l'axe d'articulation (60) de la première tringle (56) se situe sensiblement à égale distance de l'axe d'articulation (61) du levier (57) et de l'axe d'articulation (62) de la seconde tringle (58) sur ledit levier (57).

10. Machine selon la revendication 7, caractérisée par le fait qu'un pivot (59) est lié à la première tringle (56) et que la structure porteuse (1) comporte une plaque (64) munie d'orifices (65 à 69) dans lesquels le pivot (59) peut être engagé.

11. Machine selon la revendication 10, caractérisée par le fait que les orifices (65 à 69) et le pivot (59) de la tringle (56) se situent sur un arc de cercle (D) dont le centre se situe sur l'axe d'articulation (60) de la première tringle (56) avec le levier (57) lorsque le bras télescopique correspondant (8, 9) est dans la position de transport.

12. Machine selon l'une quelconque des revendications précédentes, caractérisée par le fait que la partie coulissante (13, 15) de chaque bras télescopique (8, 9) comporte une butée (18, 19) qui l'arrête dans la position rétractée de transport.

## Claims

1. Agricultural machine, especially a windrower for plants lying on the ground, comprising a carrying structure (1), at least one telescopic arm (8, 9) which is achieved in at least two parts, the first (12, 14) of which is articulated on the carrying structure and the second (13, 15) of which can slide with regard to the first part (12, 14), the said telescopic arm (8, 9) is displaceable in the direction of the height, from a work position in a transport position and vice versa, at least one work element like a windrowing rotor, the said work element being articulated on the sliding part of the telescopic arm (8, 9) and at least a device for the adjustement of the length of the said telescopic arm (8, 9), characterised in that each telescopic arm (8, 9) comprises a device with a rod (41, 42) arranged to automatically cause its elongation when it is displaced in its work position and its shortening when it is displaced in the transport position, each device with a rod (41, 42) being located between the carrying structure (1) and the sliding part (13, 15) of the corresponding arm (8, 9), the position of the device with a rod (41, 42) on the carrying structure (1) being changeable.

2. Machine according to claim 1, characterised in that each device with a rod (41) is achieved in one single rod (43) which is articulated by means of a pivot (44) on the sliding part (13, 15) of the arm (8, 9) and which can be fastened to different pivots (51 to 55) foreseen on the carrying structure (1).

3. Machine according to claim 2, characterised in that the pivots (51 to 55) are located on a line crossing the axis of articulation (16, 17) of the corresponding telescopic arm (8, 9).

4. Machine according to claim 3, characterised in that the line on which are located the pivots (51 to 55) is downwardly and outwardly inclined.

5. Machine according to anyone of the claims 2 to 4, characterised in that the rod (43) is provided with several openings (45 to 49) for its fastening to the pivots (51 to 55).

6. Machine according to claim 5, characterised in that each opening (45 to 49) of the rod (43) is located, in the transport position, on an arc of a circle crossing one of the pivots (51 to 55) and the centre of which is located on the geometrical axis of the pivot (44) of the rod (43) on the sliding part (13, 15).

7. Machine according to claim 1, characterised in that each device with a rod (42) is achieved in a first rod (56) which is articulated at the same time on the carrying structure (1) and on the lever (57) itself articulated on the first part (12, 14) of the corresponding telescopic arm (8, 9) and in a second rod (58) which is also articulated on the said lever (57) and on the sliding part (13, 15) of the arm (8, 9).

8. Machine according to claim 7, characterised in that the axis of articulation (60) of the first rod (56) of the lever (57) is located between the axis of articulation (61) of this lever (57) on the first part (12, 14) of the telescopic arm (8, 9) and the axis of articulation (62) of the second rod (58) on the said lever (57).

9. Machine according to claim 8, characterised in that the axis of articulation (60) of the first rod (56) is located approximately at the same distance from the axis of articulation (61) of the lever (57) and from the axis of articulation (62) of the second rod (58) on the said lever (57).

10. Machine according to claim 7, characterised in that a pivot (59) is connected to the first rod (56) and that the carrying structure (1) comprises a plate (64) provided with openings (65 to 69) in which the pivot (59) can be engaged.

11. Machine according to claim 10, characterized in that the openings (65 to 69) and the pivot (59) of the rod (56) are located on an arc of a circle (D) the centre of which is located on the axis of articulation (60) of the first rod (56) with the lever (57) when the corresponding telescopic arm (8, 9) is in the transport position.

12. Machine according to anyone of the preceding claims, characterised in that the sliding part (13, 15) of each telescopic arm (8, 9) comprises a abutment (18, 19) which stops it in the retracted transport position.

## Patentansprüche

1. Landwirtschaftliche Maschine, insbesondere ein Schwader für auf dem Boden befindliches Pflanzengut, welcher Schwader ein Traggestell (1), mindestens einen teleskopischen Arm (8, 9), der mindestens aus zwei Teilen besteht von welchen der erste (12, 14) an dem Traggestell (1) angelenkt und der zweite (13, 15) in bezug auf den ersten (12, 14) verschiebbar ist, wobei der teleskopische Arm (8, 9) aus einer Arbeitsstellung in eine Transportstellung hochgeschwenkt und umgekehrt aus der Transportstellung in die Arbeitsstellung heruntergeschwenkt werden kann, mindestens ein Arbeitsorgan wie einen Rotor zum Schwaden, wobei dieses Arbeitsorgan an dem verschiebbaren Teil des teleskopischen Arms (8, 9) angelenkt ist, und zumindest eine Vorrichtung zur Einstellung der Länge des teleskopischen Armes (8, 9), aufweist, dadurch gekennzeichnet, dass jeder teleskopische Arm (8, 9) ein Gestänge (41, 42), das automatische seine Verlängerung wenn er in Arbeitsstellung versetzt wird und seine Verkürzung wenn er in Transportstellung versetzt wird, auslöst, aufweist, wobei sich jedes Gestänge (41, 42) zwischen dem Traggestell (1) und dem verschiebbaren Teil (13, 15) des entsprechenden Arms (8, 9) erstreckt, wobei die Position des Gestänges (41, 42) auf dem Traggestell (1) veränderbar ist.

2. Maschine gemäss Anspruch 1, dadurch gekennzeichnet, dass jedes Gestänge (41) aus einer einzigen Stange (43) besteht, die mittels eines Zapfens (44) an dem verschiebebaren Teil (13, 15) des Arms (8, 9) angelenkt ist und die auf veschiedenen auf dem Traggestell (1) vorgesehenen Zapfen (51 bis 55) angebracht werden kann.

3. Maschine gemäss Anspruch 2, dadurch gekennzeichnet, dass sich die Zapfen (51 bis 55) auf einer Linie, die durch die Gelenkachse (16, 17) des entsprechenden teleskopischen Armes (8, 9) verläuft, befinden.

4. Maschine gemäss Anspruch 3, dadurch gekennzeichnet, dass die Linie auf welcher sich die Zapfen (51 bis 55) befinden nach unten und nach aussen geneigt ist.

5. Maschine gemäss irgend einem der Ansprüche 2 bis 4, dadurch gekennzeichnet, dass die Stange (43) mehrere zu ihrer Befestigung auf den Zapfen (51 bis 55) bestimmte Öffnungen (45 bis 49) aufweist.

6. Maschine gemäss Anspruch 5, dadurch gekennzeichnet, dass jede Öffnung (45 bis 49) der Stange (43) sich, in Arbeitsstellung auf einem durch einen der Zapfen (51 bis 55) verlaufenden Kreisbogen, befindet, und dessen Mittelpunkt sich auf der geometrischen Achse des Zapfens (44) der Stange (43) auf dem verschiebbaren Teil (13, 15) befindet.

7. Maschine gemäss Anspruch 1, dadurch gekennzeichnet, dass jedes Gestänge (42) aus einer ersten Stange (56), die gleichzeitig an dem Traggestell (1) und an einem Hebel (57) angelenkt ist, welcher Hebel (57) selbst auf dem ersten Teil (12, 14) des entsprechenden teleskopischen Armes (8, 9) angelenkt ist, und einer zweiten Stange (58) die ebenfalls an dem Hebel (57) und auf dem verschiebbaren Teil (13, 15) des Arms (8,9) angelenkt ist, besteht.

8. Maschine gemäss Anspruch 7, dadurch gekennzeichnet, dass die Gelenkachse (60) der ersten Stange (56) an dem Hebel (57) sich zwischen der Gelenkachse (61) dieses Hebels (57) an dem ersten Teil (12, 14) des teleskopischen Arms (8, 9) und der Gelenkachse (62) der zweiten Stange (58) an dem Hebel (57) befindet.

9. Maschine gemäss Anspruch 8, dadurch gekennzeichnet, dass die Gelenkachse (60) der ersten Stange (56) sich im wesentlichen in gleichem Abstand von der Gelenkachse (61) des Hebels (57) und von der Gelenkachse (62) der zweiten Stange (58) auf dem Hebel (57) befindet.

10. Maschine nach Anspruch 7, dadurch gekennzeichnet, dass ein Zapfen (59) mit der ersten Stange (56) verbunden ist und dass das Traggestell (1) eine Platte (64) aufweist, die mit Öffnungen (65 bis 69) in welche der Zapfen (59) eingeführt werden kann, versehen ist.

11. Maschine nach Anspruch 10, dadurch gekennzeichnet, dass die Öffnungen (65 bis 69) und der Zapfen (59) der Stange (56) sich auf einem Kreisbogen (D) befinden, dessen Mittelpunkt auf der Gelenkachse (60) der ersten Stange (56) an dem Hebel (57), wenn der entsprechende teleskopische Arm (8, 9) sich in der Transportstellung befindet, liegt

12. Maschine nach irgend einem der vorhergehenden Ansprüche, dadurch gekennzeichnet, dass der verschiebbare Teil (13, 15) eines jeden teleskopischen Arms (8, 9) einen Anschlag (18, 19), der ihn in der eingeklappten Transportstellung anhält, aufweist.
